# EUROPEAN PATENT SPECIFICATION

(11) **EP 1 837 294 B1**
(45) Date of publication and mention of the grant of the patent: **23.07.2008**
(21) Application number: 06425260.4
(22) Date of filing: 12.04.2006
(51) Int. Cl.: B65D 85/804, A47J 31/40

(54) **Cartridge for the preparation of drinks**
Kartusche für die Zubereitung von Getränken
Cartouche pour la préparation de boissons

(30) Priority: 23.03.2006 IT MI20060538
(43) Date of publication of application: 26.09.2007
(73) Proprietor: Mondini, Nazzareno, 25033 Cologne Bresciano (IT)
(72) Inventor: Mondini, Nazzareno, 25033 Cologne Bresciano (IT)
(74) Representative: Gandini, Claudio

(56) References cited:
- EP-A1- 1 247 756
- EP-A1- 1 344 722
- EP-A1- 1 440 913
- US-A1- 2005 051 478

## Description

On the market there are machines for the preparation of drinks, using sealed cartridges some of which are made of water- and airproof materials.

These machines are designed to prepare drinks through the positioning of a ***cartridge,*** for instance a coffee ***cartridge**,* in an infusion chamber, where hot water passes through and intercepts the ***cartridge*** at relatively high pressures. So, aromatic elements are extracted from ground coffee.

The critical observation of functioning problems regarding these machines and cartridge sealing, as far as preservation and use are concerned, has led to a gradual evolution and innovation, where it is always almost impossible to separate research on ***cartridges*** from the machine and the method put in progress.

Machines of the aforesaid type have been relatively expensive up to day, as their components, such as water pumps and gaskets, must be capable of resisting high pressures.

The initial care of manufacturers on machines for only industrial and commercial market has been followed by the attention towards the market of families.

This has immediately moved the attention not only on simple and reliable machines when operating, but also on new types of cartridges.

Subsequent inventions have produced locking devices for drink machines, featured by the presence of an infusion chamber consisting of two parts.

When in the ON position, the ***cartridge*** can be placed; the lower and upper sides of the of the machine ***cartridge*** slot are movable towards each other.

When in the OFF position, the ***cartridge*** is held between the upper side and the lower side.

In this position, the machine locking device gets into contact with the ***cartridge**'s* upper and lower surface.

Locking devices are strong and ensure that the ***cartridge*** does not expand, is not lost or does not explode during functioning.

An example of a ***cartridge*** with progressive deformation to the outside of the back wall can be found in patent number EP 1295554.

Usually, the exercised compressive strength prevents deformation or the movement of the ***cartridge*** components.

This ensures that the inside dimensions of the ***cartridge*** openings and ways remain fixed and any deformation during the ***cartridge*** pressurization is prevented.

This invention considers the definition of a method for the extraction of liquid products through the use of a machine, which is designed so that hot water is conveyed into the inside of the aforesaid ***cartridge*** containing the desired infusion product and the required drink is delivered.

The present invention consists in a cartridge as defined in claim 1.

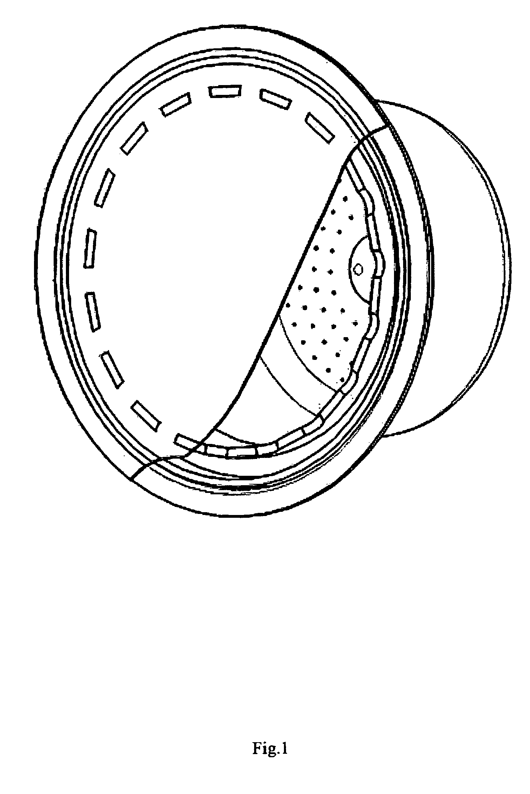

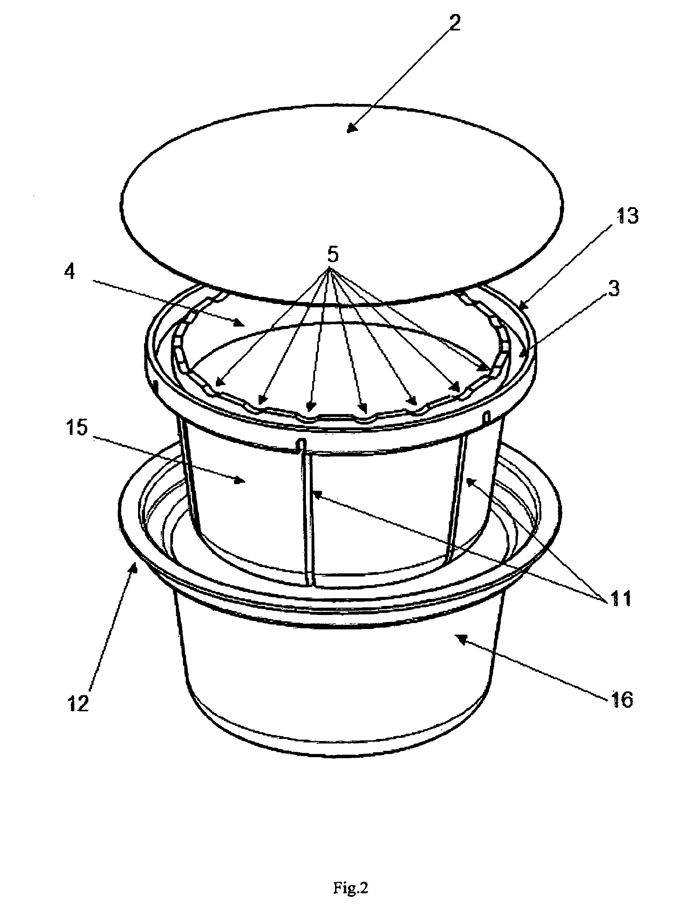

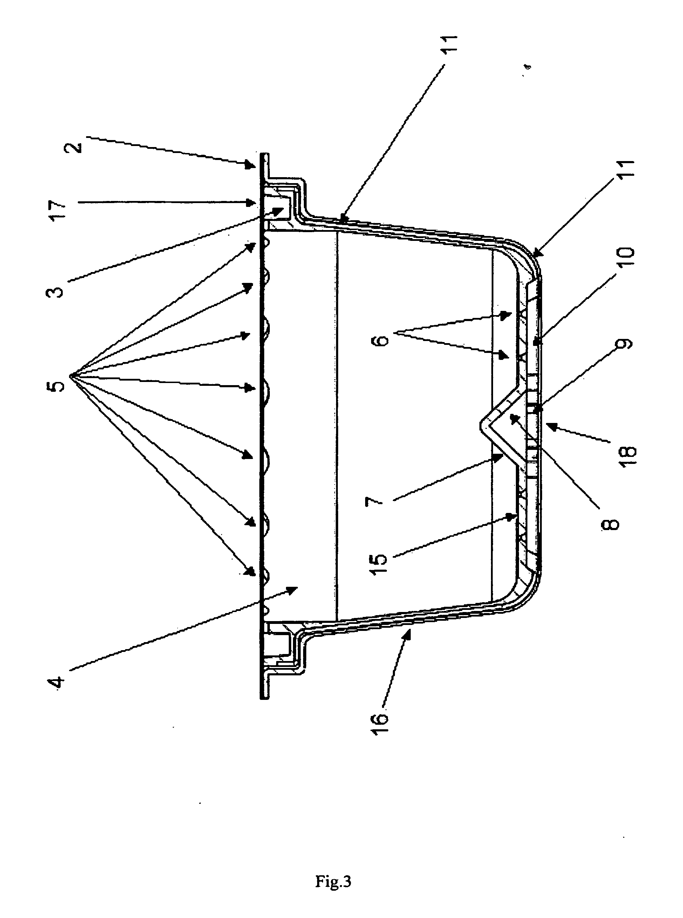

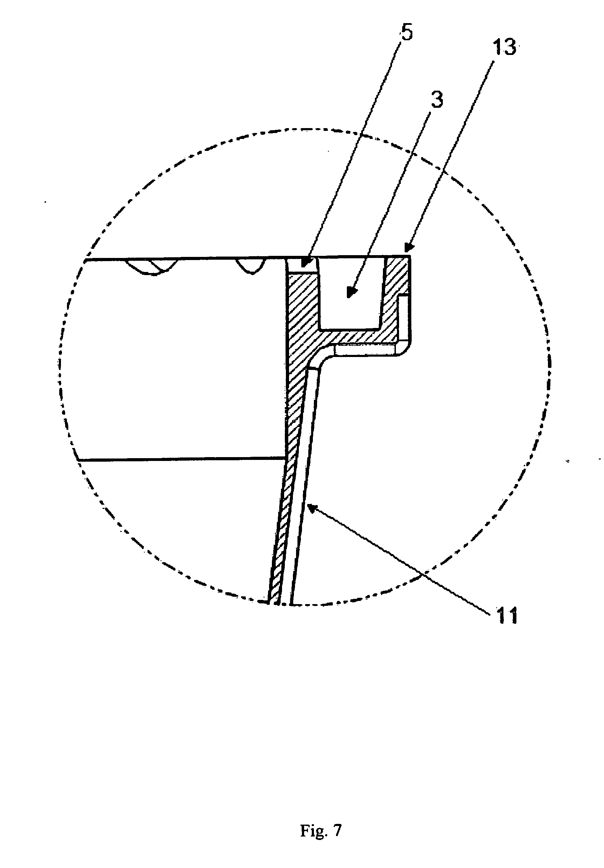

The ***cartridge*** is shown in **Fig. 1** and its structure in the following **Figures 2** through **7****.**

The infusion product is inside the ***cartridge**,* which is made up of three elements as shown in **Fig. 2****.**

The first element, the inside ***cartridge* (15),** consists of a stiff and strong structure that contains a product, powdered, freeze-dried or anyway hot-watersoluble, and allows water to pass through the inside holes **(5)** to cross the infusion chamber **(4)** where the product is contained, and then reaches the filtering area **(10),** entirely preventing any product leak.

From the filtering area **(10)** the extracted product goes to a gathering point (**8**) through *radial channels* (**9**).

The first element is also provided with air *channels* **(11)** for integral air and oxygen suction, before ***cartridge*** sealing **(1)** as well as a drain **(3)** for water feeding and flowing.

The second element, the external ***cartridge*** (16) is a protective cover serving as an air and water barrier containing the first element **(15)** above described. Within this element **(16)** the product maintains its characteristics unaltered over time and the ultimate user may taste his or her favourite drink, certain that the product has been preserved correctly without undergoing any alteration due to humidity or oxidation: from the *cartridge* **(1)** you may extract a drink with the full flavour of a just-prepared product.

Such cover **(16),** as shown in **Fig. 2****,** can serve as a rigid or semi-rigid container, having an aluminium or EVOH barrier or again a EVOH-based covering applied against the first element **(15)** in a rigid way.

The third element is a barrier film **(2),** made of aluminium or EVOH, which is sealed right on the first welding point **(12)** against the second element **(16),** and against the first element **(15)** on the second **(13)** and third **(14)** welding point.
Finally, the third element **(2)** forms a single unit **(13)** with both the second element **(16)** and the first element **(15)** so that the pack is hermetically sealed as shown in **Fig. 1****.**

The three elements - so featured and further described, together with the opportunity of extracting any residual oxygen in the inside and from product, along two preferential ways, above and under the product and not only from above, so that passing-through way of product is shorter -, represent the grounds of this invention.

The ***cartridge,*** so composed, is characterised by rigidity and sturdiness, allowing for preserving the product against any change due to the possibility of extraction because of any impact or crushing of the ***cartridge* (1),** allowing, before sealing, a complete extraction of air from the inside and the product, from the upper and lower sides, and avoids the machine water delivering elements from coming into contact with the product.

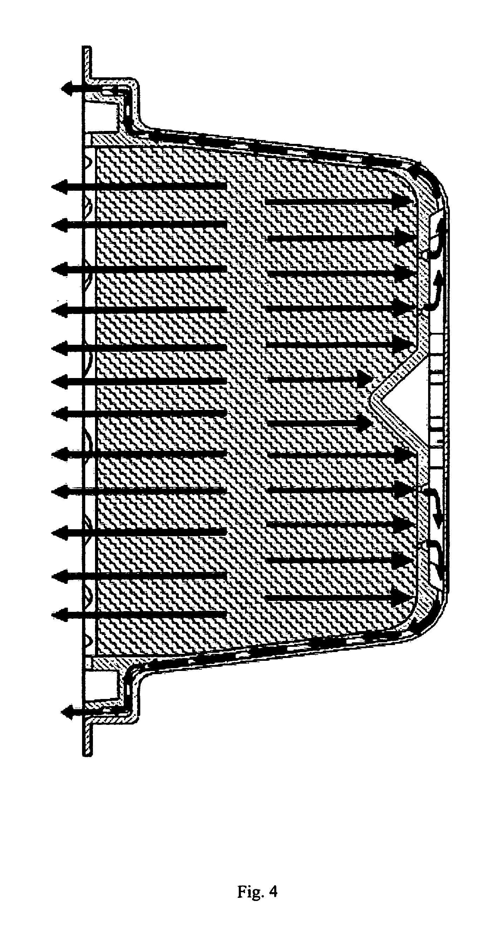

The structure of the ***cartridge**,* subdivided into the three elements above, is such that, in the step previous to sealing, air can be extracted from the above and under the product. Thus, the surfaces to act on are two and conditions are created so that oxygen is extracted in the most efficient way **(****Fig. 4****),** without clogging any area because of the presence of air or oxygen in the inside.

In particular, the extraction of oxygen does not occur as usual, through the upper top_surface. In this invention, the extraction of oxygen is also made possible through the use of ducts **(11)** connecting the suction or inert atmosphere washing systems to the lower surface of the product, already contained in the first element **(15).**

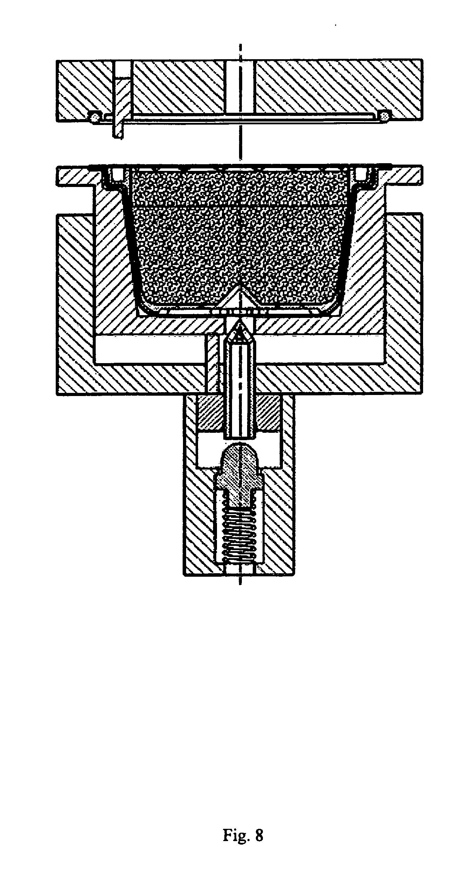

As already said, the ***cartridge* (1)** is designed and made so that the machine delivering devices do not come into contact with the product, once the ***cartridge*** is positioned inside the slot on the machine **(****Fig. 8****),** thus avoiding scale on the water feed-in side and ensuring an excellent final result in the preparation of the product itself.

An easy use and certainty of a final result, which are possible through the use of this ***cartridge,*** allow creating simple machines in the structure, easy to use and marketable at a reasonable price.

In fact, such machines can check the infusion cycle, adjusting both the water flow into the ***cartridge*** and out of it, obtaining the desired infusions over time and for the length of delivery.

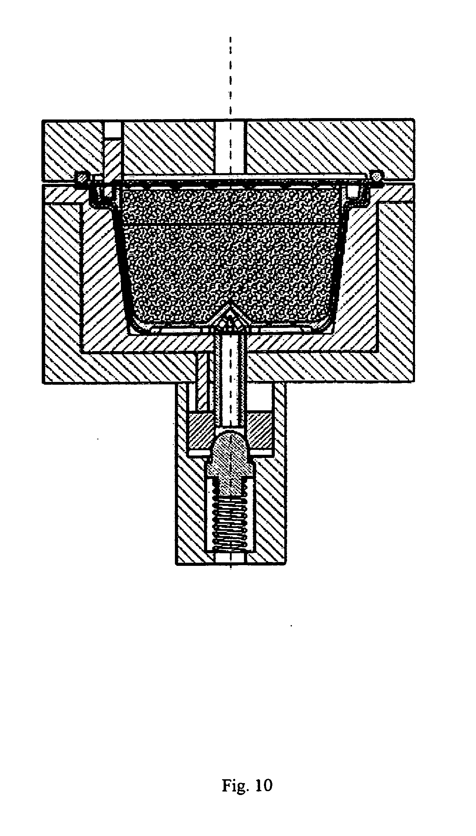

With the use of this ***cartridge*** it is also possible to avoid problems regarding the variation of hardness in the material constituting the second element **(16)** and ***cartridge***acity of perforating it, immediately piercing the ***cartridge*** before starting the water delivering cycle **(****Fig. 10****),** just on the lower **(18)** and upper **(17)** perforation area, on the drain.

It is only through the user who adjusts the delivering machine that the desired item is produced.

In addition, adjusting the working pressure of the machine, being aware of a ***cartridge*** subjected to any kind of pressure, it will be possible to easily select the type of infusion.

In other words, as the ***cartridge*** is opened, on top and bottom, when closing the machine, the user can adjust the delivery pressure to obtain the desired drink.

Limits of the previous inventions can be identified as follows: ***cartridges,*** differently shaped, served as a simple container provided with a barrier and the delivering machine inevitably became encrusted, despite the many attempts made to solve such a problem caused by the leakage of product from the ***cartridge.***

A further step in the technique was the inclusion of single-use filters for the purpose of solving the problem of product remaining inside the *cartridge* and preventing scale as well as ensuring a perfect exploitation of the infused product.

The use of these filters has anyway increased the difficulties of extracting air from the ***cartridge**.*

The structure of the ***cartridge**,* subject matter of this invention, is such that, before sealing, it allows an integral taking of oxygen and, during the infusion, avoids any contact of the machine with the product and, in the last step of the infusion delivery, given the presence of barriers described later on, prevents any product leakage inside the machine.

As already said, the residual oxygen is extracted from the product along two preferential ways, above and under the product, so that the passing-through way of product is shorter **(****Fig. 4****).**

### Description of Cycle 1 cartridge preparation

Before making the ***cartridge*** completely tight, the product shall be cleaned by extracting all air contained in it, for the purpose of ensuring the ultimate user to taste a high quality drink.

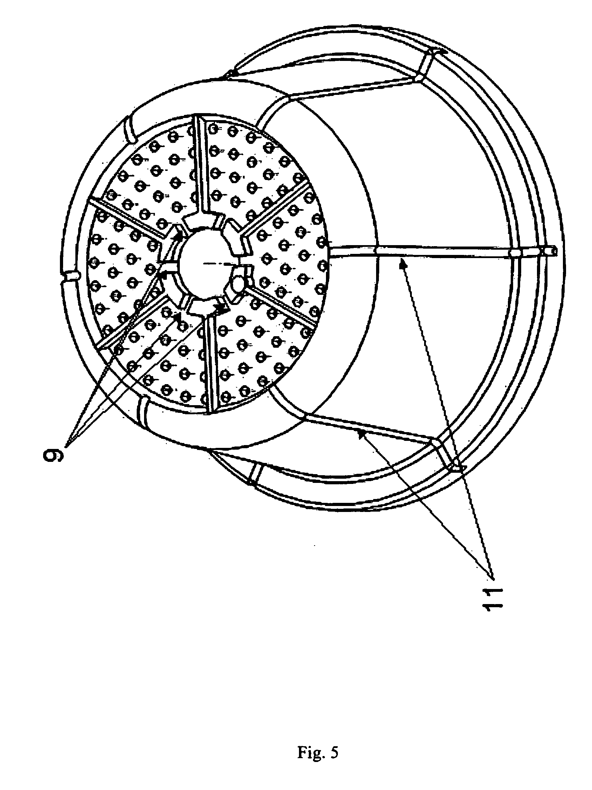

Channels (**9** and **11**), particularly visible in the details of **Fig. 5**, allow a complete extraction of air.

In addition, the flow, as shown in **Fig. 4****,** doubles the direction of air extraction, surpassing the traditional single-direction setting in air extraction, ensuring a better result.

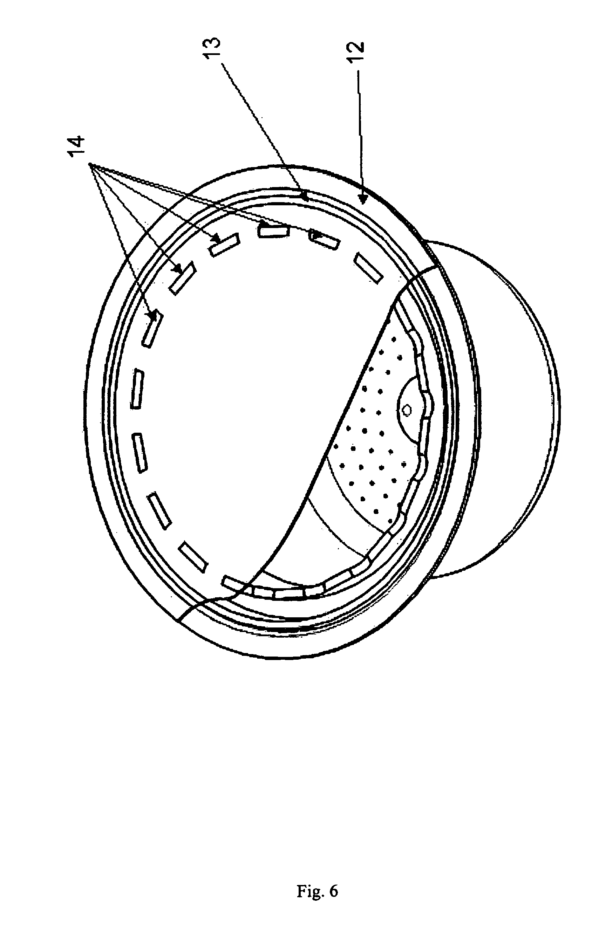

At this point, sealing is completed on three levels **(****Fig. 6****)**

A gasket made for this ***cartridge*** (**1**) is intended to give a suitable cover for the shape of the external ***cartridge* (16)** that serves as a barrier. In the upper side, the sealing head is shaped in the same way, making the ***cartridge*** completely hermetic **(1)** and, in particular, securing the first welding zone **(12).**

A second welding zone **(13)** eliminates any possible water passing through the nozzle of the delivering machine, so that water only passes through the inside of product, without allowing any passage between the external and internal ***cartridge*** through the channels **(11)**.

Finally, a third welding **(14)** seals the film **(2)** on the internal ***cartridge* (15)** through a discontinuous welding, so that:
1) resistance is opposed to the flow of water through the drain **(3)** until reaching the product with only a certain pressure;
2) it can serve as a check valve at the end of delivery.

### Description of Cycle 2 - Use of the cartridge

The ***cartridge*** is positioned inside the infusion machine in automatic, manual and semi-manual way, depending on the machine model.

Once the ***cartridge* (1)** is placed into the slot, as shown in **Fig. 8****,** the water delivering cycle is activated, after the delivery flow has been adjusted, following the instructions for use of the machine.

For instance, in case the drink is coffee, through this type of adjustment, it is possible to obtain more or less or even no cream.

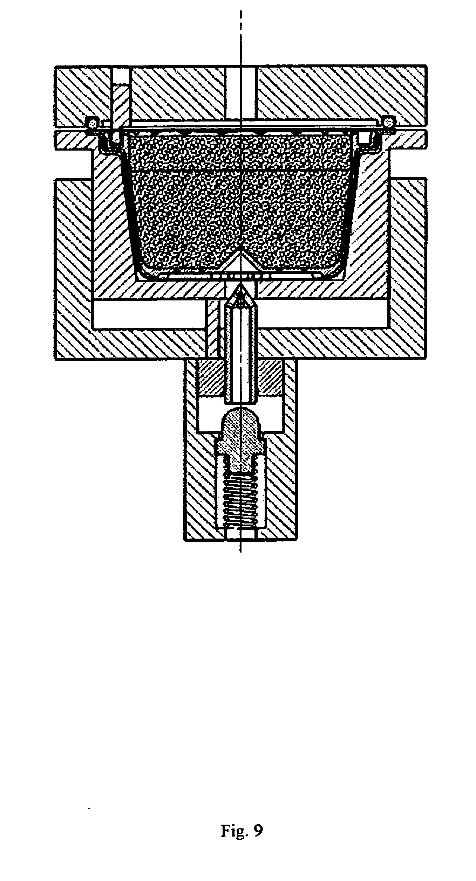

After the ***cartridge*** has been placed and stopped, it is time for preparation. This stage aims at delivering the drink through the perforation of the upper and lower side, as shown in **Fig. 9** through **Fig. 10****.**

The ***cartridge*** perforation is completed in the upper perforation area **(17)** by means of some elements that operate on the barrier film as displayed in **Fig. 9****,** regardless of the number of points or drills moving or the ***cartridge*** moving.

Properly at this stage, the ***cartridge*** is perforated in the lower zone **(18)** as shown in **Fig. 10****,** so that the infusion cycle starts and stops, ensuring the ***cartridge*** is perfectly opened and ready for use.

In fact, the upper side of the film **(2)** is opened, just on the point where one or more holes have been perforated, through which water reaches the aforementioned draining way or drain **(3)**

At this point, water, properly warmed, is conveyed to the upper side of the ***cartridge.***

Once the drain **(3)** is completely full, the pressure of water starts increasing, as the feeding pump is continuing with its slow operation of water delivery.

The pressure of water masters the resistance produced by the discontinuous film welding zone **(14)** and enters the product containing chamber **(4),** from which the drink is extracted.

The peculiarity of welding allows avoiding water from going through the less resistant path, through the space between external **(16)** and internal **(15) *cartridge.***

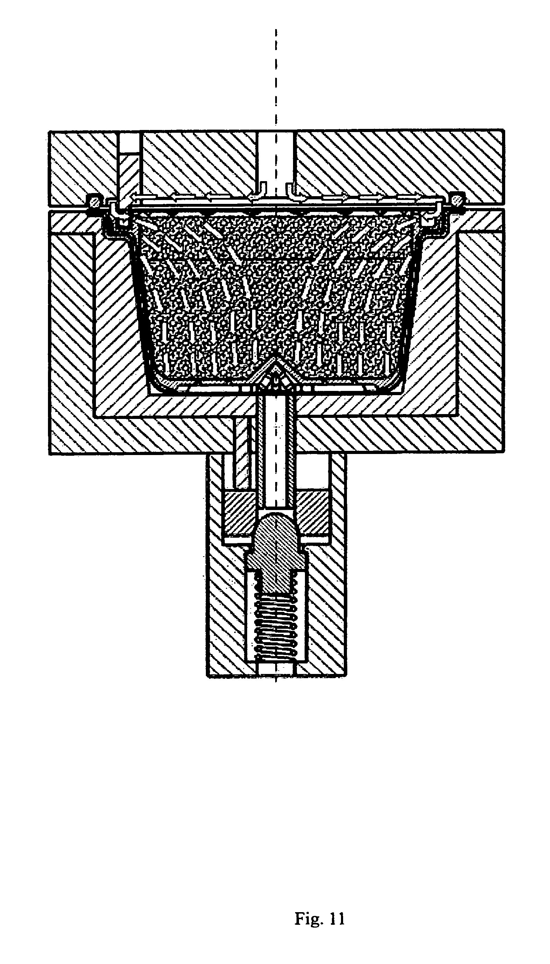

Water is dispensed along the upper surface of product, starting from the circumference of the ***cartridge*** and reaching the centre of the circle, following a radial course, and is absorbed by the product, as shown in **Fig. 11****.**

The water completely fills the ***cartridge* (1)** from the upper surface and moves down through the product until a complete infusion.

Once the pressure set by the user is set, the pre-infusion phase can be considered as concluded: pressure is equal to the lower valve pressure and as soon as it is exceeded, the infused product starts being delivered.

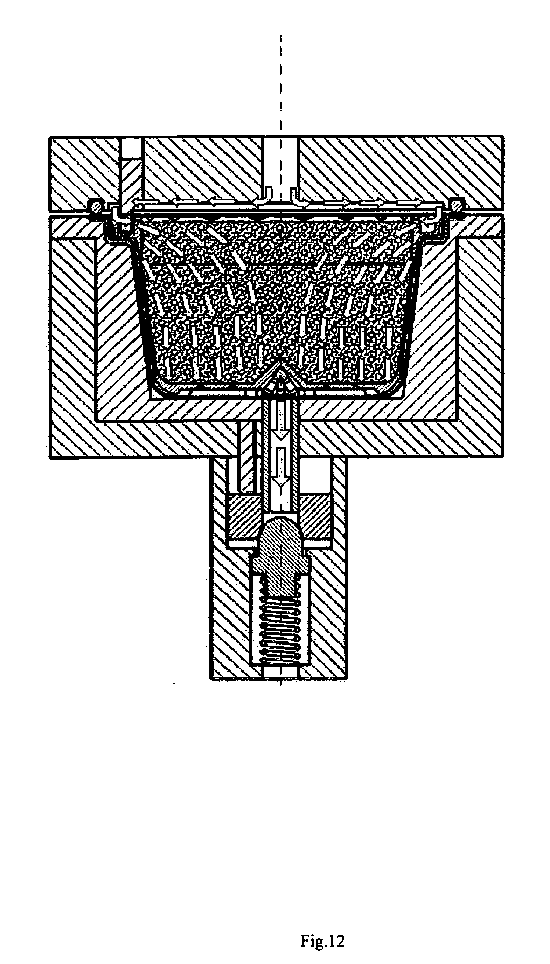

In fact, the off valve, which is usually on, is now in the off position, avoiding any product leakage from the slot: dosing starts only when the pressure inside the ***cartridge*** reaches the pressure value set in the lower valve by the user **(****Fig. 12****).**

The ultimate consumer stops delivery when he or she wishes to.

At the end of the infused product delivery, the lower valve can reach the home position, remaining in the ON position until the next delivery of product. This ensures good functioning over time because, the lower valve, being ON, cannot obviously stop in the OFF position. Only the mechanical OFF cycle, concluded by the next delivery, makes it move to the OFF position.

Critically observing what happens when using ***cartridges*** on the market, it sometimes occurs that some portion of the infusion product reaches the nozzle or nozzles that feed water, producing scale on it/them.

In fact, the product is in the internal side of the ***cartridge*** and the reduction of the external pressure can allow the light flow of the infused product from the inside of ***cartridge*** up to the covering film.

The conformation of this ***cartridge* (1)** sets a series of obstacles to the product delivery: first, the duct **(3)** is full of water and, thus, it could flow out. Second, the discontinuous sealing **(14)** which has previously ensured a constant flow along the whole circumference of ***cartridge**,* represents a barrier that can be difficult to overcame.

In addition, even in case some product residuals pass through such barrier, these would fall into a wide zone, if compared to the previous step, that is, in the drain, where the delivery push would be lost.

A further barrier is represented by the fact that such product residuals should, before being able to come out, reach the area (**17**) where the barrier film (**2**) has been perforated. The whole circumference (360°) includes one ore more ways, created by points or drills, comparable to some degrees out of 360°.

## Claims

1. A ***cartridge*** (**1**) for the preparation of drinks or liquid food, such as coffee - espresso or classical, American or other types of coffees, or teas, camomile tea, barley coffee, chocolate, soups or other food, freeze-dried or powdered, obtainable through sufficiently adjustable-pressure-warmed water, where the infusion product is inside the ***cartridge*** itself (**1**), made up of three elements, the first (**15**) of which consists of a rigid and sturdy structure having the function to contain the product ; the second element is a cover (**16**) serving as water and air barrier in the inside of which is the element described above; the third element is a barrier film **(2),** which is united to the first element and the second element, so that the pack is made hermetic and a unique body is created, where the extraction of air (oxygen), both through the ***cartridge*** and the product, is made, before sealing, from the upper and then the lower part, through radial channels (**9**) and air channels (**11**) formed between the inner element (15) and the cover (16) and its features are as follows:
a) the third element (**2**) is sealed to the cartridge at three locations, i.e the outer periphery of the second element (**16**), the outer periphery of the first element and a discontinuos inner rim of the first element, a drain being formed between the outer periphery of the first element, internal holes (**5**) formed between the barrier film (**2**) and the discontinuos rim and the inside of second element;
b) the first internal element allows the water to flow through the internal holes (**5**) and the product to a filtering area (**10**), impeding any leakage of infused product, such that the extracted product reaches a collecting area (**8**) through the *radial channels* (**9**);
c) water delivered by the machine is conveyed, from above, through the barrier film, previously perforated, into one or more points by the machine itself and then through the drain (**3**) whereby, once the drain (**3**) is completely full, the pressure of water starts increasing, overcomes the resistance produced by the discontinuous welding film area (**14**) and enters the product containing chamber (**4**) from which the drink is conveyed to the collecting area (**8**) and extracted through another perforation.

2. ***A cartridge as defined in claim 1, further comprising*** a sealing made through welding, linking each *cartridge* constituent part to each other (1).

3. ***A cartridge as defined in claim 1 further comprising*** vacuum and gas ducts so that no clogged chamber is created in the inside.

4. ***A cartridge as defined in claim 1 further comprising*** vacuum and gas ducts, so that no clogged chamber is created in the inside, which ducts can also be used for washing by inert atmosphere only, connecting the areas inside the ***cartridge*** which would remain clogged because of the presence of product in the inside.

## Patentansprüche

1. Eine Kapsel (1) die der Zubereitung von Getränken oder flüssigen Speisen dient, wie Kaffee, Espresso, kleine oder große Tassen Kaffee, Tee, Kamillentee, Malzkaffee, Schokolade, Suppenbrühe und andere Produkte, gefriergetrocknet, in Pulverform oder in einer anderen in Warmwasser löslichen Form, wobei das auf die erforderliche Temperatur erhitzte Wasser unter einem einstellbaren Druck durch die Kapsel (1) gefördert wird, die aus drei Elementen besteht. Das erste Element (15) hat eine steife und robuste Struktur und dient der Aufnahme des Produkts; das zweite ist eine wasser- und luftdichte Hülle (16) in welcher sich das erste Element befindet; das dritte Element ist ein Schichtstoff (2) der sowohl mit dem ersten als auch mit dem zweiten Element verbunden ist um die Kapsel vollständig abzudichten. Dadurch ist die Kapsel ein einheitlicher Körper aus dem die Luft (Sauerstoff) sowohl aus der Kapsel selbst als auch aus dem Produkt vor dem Verschweißen von oben und von unten durch radiale Kanäle (9) und Luftkanäle (11), die sich zwischen dem ersten Element (15) und der Hülle (16) gebildet haben, abgezogen wird. Kennzeichnend ist Folgendes:
a) Das dritte Element (2) ist an drei Stellen mit der Kapsel verschweißt, d.h. das zweite Element (16) ist mit dem Außenrand und das erste Element (15) ist ebenfalls mit dem entsprechenden Rand und mit einem inneren diskontinuierlichen Rand des ersten Elements verschweißt. Ein Abflusskanal bildet sich zwischen dem äußeren Rand des ersten Elements, inneren Löchern (5), die sich zwischen dem Film gebildet haben, dem diskontinuierlichen Rand und dem Inneren des zweiten Elements.
b) Das erste innere Element, lässt das Wasser durch die inneren Löcher (5) und das Produkt zu einem Filterbereich (10) fließen, was eine Austreten des zubereiteten Produkts verhindert und dafür sorgt, dass das extrahierte Produkt durch radiale Kanäle (9) in einen Sammelbereich (8) gelangt.
c) Das vom Gerät abgegebene Wasser wird von oben durch den Film (3) gefördert, der zuvor an einer oder mehreren Stellen durch das Gerät selbst durchlocht wurde. Es fließt dann durch den Abflusskanal (3), wobei der Wasserdruck steigt, sobald der Abflusskanal voll ist, überwindet den Widerstand, der vom diskontinuierlich geschweißten Film (14) geleistet wird, und gelangt in den Raum, wo sich das Produkt befindet und von wo aus das Getränk in den Sammelbereich (8) befördert und durch ein anderes Loch herausgenommen wird.
Das von der Maschine abgegebene Wasser wird von oben durch die zuvor perforierte Barrierefolie an eine oder mehrere Stellen

2. Eine Kapsel gemäß Patentanspruch 1, ist zudem durch eine Versiegelung charakterisiert, bei der die drei Elemente der genannten Kapsel (1) untereinander verschweißt sind.

3. Eine Kapsel gemäß Patentanspruch 1, kennzeichnet sich darüber hinaus durch die Gegenwart von Luft- und Gasdurchgänge so dass sich keine Okklusionskammern im Inneren bilden können.

4. Eine Kapsel gemäß Patentanspruch 1, kennzeichnet sich darüber hinaus durch die Gegenwart von Luft- und Gasdurchgänge so dass sich keine Okklusionskammern im Inneren bilden können. Diese Kanäle können auch verwendet werden um das Produkt mit Inertgas zu spülen und die inneren Bereiche der Kapsel miteinander zu verbinden, die bei anderen Kapseln durch dasselbe Produkt verstopft sind.

## Revendications

1. Une capsule (1) pour la préparation de boissons ou d'aliments liquides, tels que le café, express ou classique, café américain ou autre ou le thé, la camomille, l'orge, le chocolat, les bouillons et les autres produits, sous forme lyophilisée ou en poudre, réalisables en introduisant de l'eau suffisamment chauffée à une pression réglable, où le produit d'infusion est à l'intérieur de la capsule (1) composée de trois éléments, le premier (15) est constitué par une structure rigide et robuste qui a la fonction de contenir le produit; le deuxième élément est une enveloppe (16) qui sert de barrière à l'eau et à l'air à l'intérieur de laquelle se trouve le premier élément décrit ci-dessus; le troisième est un film barrière (2) solidaire aussi bien avec le premier élément qu'avec le second élément, pour rendre hermétique l'emballage, constituant ainsi un corps unitaire dans lequel l'extraction de l'air (oxygène), aussi bien de la capsule que du produit, est effectuée, avant la soudure, tant de la partie supérieure que de celle inférieure, à travers les canaux radiaux (9) et les canaux d'air (11) et **caractérisée par le fait que**:
a) le troisième élément (2) est soudé à la capsule en trois points c'est-à-dire le deuxième élément (16) en correspondance du bord extérieur, le premier élément (15) lui aussi en correspondance du bord correspondant et un bord intérieur discontinu du premier élément, un canal d'écoulement étant formé entre le bord extérieur du premier élément, les trous internes (5) formés entre le film barrière (2) et le bord discontinu et l'intérieur du deuxième élément;
b) le premier élément intérieur permet le passage de l'eau à travers les trous internes (5) et le produit jusqu'à une zone de filtrage (10), empêchant toute fuite du produit infusé, le produit extrait parvient ainsi au collecteur (8) en passant par des canaux radiaux (9);
c) l'eau distribuée par la machine est canalisée, en partant d'en haut, à travers le film barrière préalablement perforée en un ou plusieurs points par la machine, puis à travers le canal d'écoulement (3). Une fois que le canal d'écoulement (3) est complètement plein, la pression de l'eau commence à augmenter, atteignant la résistance produite par la zone de pellicule ayant la soudure discontinue (14) et l'eau pénètre dans la chambre contenant le produit (4) de laquelle la boisson est canalisée jusqu'au collecteur (8) et extraite à travers d'autres perforations.

2. Une capsule mentionnée à la revendication 1, **caractérisée en outre par** un scellage réalisé par soudure, unissant entre eux les trois parties constituant cette capsule (1).

3. Une capsule mentionnée à la revendication 1, **caractérisée en outre par** la présence de canaux pour le passage du vide et du gaz afin qu'il ne se créent pas de chambres bouchées à l'intérieur.

4. Une capsule mentionnée à la revendication 1, **caractérisée en outre par** la présence de canaux pour le passage du vide et du gaz, afin qu'il ne se créent pas de chambres bouchées à l'intérieur, des canaux qui ne peuvent être utilisés que pour le lavage avec une atmosphère inerte en mettant en communication des zones intérieures de la capsule qui, dans des autres réalisations, seraient bouchées par la présence de produit à l'intérieur.
